# EUROPEAN PATENT SPECIFICATION

(11) **EP 3 098 406 B1**
(45) Date of publication and mention of the grant of the patent: **02.01.2019**
(21) Application number: 15735315.2
(22) Date of filing: 05.01.2015
(51) Int. Cl.: F01N 3/04, B01D 47/10, B01D 53/14, B01D 53/18, B01D 53/50, B01D 53/77, B63H 21/32, B63H 21/38, F02M 26/00, F02M 26/35, F02M 26/36, F02B 29/04

(54) **EXHAUST GAS TREATMENT DEVICE, SHIP, AND WATER SUPPLY METHOD**
ABGASBEHANDLUNGSVORRICHTUNG, SCHIFF UND WASSERVERSORGUNGSVERFAHREN
DISPOSITIF DE TRAITEMENT DE GAZ D'ÉCHAPPEMENT, NAVIRE ET PROCÉDÉ D'ALIMENTATION EN EAU

(30) Priority: 09.01.2014 JP 2014002756
(43) Date of publication of application: 30.11.2016
(73) Proprietor: Mitsubishi Heavy Industries, Ltd., Tokyo 108-8215 (JP); Japan Engine Corporation, Akashi-shi, Hyogo 674-0093 (JP)
(72) Inventor: OBA, Hiromichi, Tokyo 108-8215 (JP); HIRAOKA, Naohiro, Tokyo 108-8215 (JP); UEDA, Takashi, Tokyo 108-8215 (JP)
(74) Representative: Hoffmann Eitle
(86) International application number: PCT/JP2015/050053
(87) International publication number: WO 2015/105073

(56) References cited:
- WO-A1-2013/178691
- WO-A1-2014/103337
- DE-A1-102006 054 227
- JP-A- 2011 157 959
- JP-A- 2011 157 959
- JP-A- 2012 127 205
- JP-A- 2012 180 814
- JP-A- 2014 005 805

## Description

### Field

The present invention relates to an air pollution control device which treats an exhaust gas discharged from a marine diesel engine, to a ship including the air pollution control device, and to a water supply method. Background

An exhaust gas discharged from a diesel engine includes a toxic substance such as NOx, SOx, and soot dust. In particular, with regard to a marine diesel engine for which a low-quality fuel is used, an amount of toxic substances included in the exhaust gas is large. Therefore, in order to deal with various emission controls increasingly tightened recently, a technique for treating the toxic substances and an air pollution control device are required for the marine diesel engine.

As a method for reducing NOx in an exhaust gas, there is a technique called exhaust gas recirculation (EGR). The EGR is a technique with which a part of an exhaust gas discharged from a combustion chamber of a diesel engine is returned to the combustion chamber with being mixed to combustion air and making the mixture gas. Consequently, the concentration of oxygen in the mixture gas is decreased, and accordingly, the speed of combustion, which is a reaction of a fuel with oxygen, is reduced for decreasing a combustion temperature. As a result, an amount of NOx generated can be reduced.

An exhaust gas discharged from a diesel engine includes SOx and soot dust, which are toxic also to the engine, as described above. Therefore, the exhaust gas flows through an EGR valve into a scrubber, where a toxic substance such as SOx and soot dust in the exhaust gas is removed. Subsequently, the exhaust gas is mixed with combustion air incoming from the atmosphere, and then the mixed gas is returned to the diesel engine. At that time, the scrubber removes the toxic substance by injecting water into the exhaust gas. The scrubber is useful as a device for removing SOx and soot dust not only from a recirculation gas but also from the exhaust gas discharged from a stack.

As an example of an exhaust gas recirculation system, there is a system described in Patent Literature 1 below. In addition, as an example of a drain water treatment device which treats generated drain water, there is a device described in Patent Literature 2 below.

Further, JP 2011-157959 A discloses an exhaust gas recirculation system for a cross head type large two-cycle diesel engine for a vessel. This exhaust gas recirculation system includes: a wet scrubber including a plurality of cylinders respectively connected to an exhaust receiver and an exhaust gas recirculation flow passage for supplying a part of the exhaust gas to a scavenging flow to control emission of the recirculation exhaust gas; a cooling machine for cooling the exhaust gas to a temperature, at which at least a part of the steam included in the recirculation exhaust gas condenses; a condensed water eliminating device; and a blower provided in the exhaust gas recirculation flow passage.

WO 2013/178691 A1 discloses o an internal combustion engine, in particular a large diesel engine such as a diesel internal combustion engine for a ship, comprising an at least one-stage exhaust gas supercharging system, which has at least one exhaust gas turbocharger having a compressor and a turbine, and comprising an exhaust gas recirculation system, which diverts exhaust gas from the exhaust gas flow and mixes said exhaust gas with compressed charge air, wherein the exhaust gas recirculation system comprises a desulfurizing device, which is used to desulfurize the exhaust gas conducted by means of the exhaust gas recirculation system, and wherein the desulfurizing device is designed as a fixed-bed adsorber.

### Citation List

### Patent Literature

Patent Literature 1: Japanese Laid-open Patent Publication No. 2012-127205
Patent Literature 2: Japanese Laid-open Patent Publication No. 04-139302

### Summary

### Technical Problem

In the conventional air pollution control device described above, the scrubber provided in an exhaust gas recirculation line removes a toxic substance by injecting water into the exhaust gas. In that case, the water injected for removing the toxic substance is collected, retreated through filtration, and then used again for removing the toxic substance. On the other hand, since the exhaust gas is at a high temperature, water vapor is generated by the water injection and the water vapor is taken away by the exhaust gas. Consequently, an amount of water to be used for a removal treatment of toxic substance is gradually decreased by a water treatment through filtration or evaporation caused by the exhaust gas at a high temperature. Therefore, fresh water stored in a fresh water tank has been conventionally replenished to the scrubber. The fresh water is generated with a water generator mounted on a ship. When an amount of water replenished to the scrubber increases, the size of the water generator increases, which in turn leads to a larger burden on a ship facility.

The present invention solves the problem described above, and an object of the present invention is to provide an air pollution control device, a ship, and a water supply method capable of suppressing an increase in size and cost of the device by effectively using treated water.

### Solution to Problem

An air pollution control device according to the present invention is defined by claim 1. Dependent claims relate to preferred embodiments. A water supply method according to the present invention is defined by claim 8.

Accordingly, when a part of an exhaust gas discharged from an engine flows through the exhaust gas recirculation line, the scrubber injects water into the exhaust gas flowing through the exhaust gas recirculation line to remove a toxic substance, and the cooler cools a mixture gas in which air and a recirculation gas are mixed. At that time, the condensed water supply device supplies, to the scrubber, condensed water generated by cooling the mixture gas by the cooler, as water to be injected into the exhaust gas. Therefore, a necessary amount of water such as fresh water to be supplied to the scrubber, as water to be injected into the exhaust gas, decreases. Consequently, an increase in size and cost of the device can be suppressed by effectively using treated water.

Advantageously, the air pollution control device further comprises: a water storage tank that stores water injected into the exhaust gas; a water amount sensor that measures an amount of water in the water storage tank; and a control device that starts or stops supply of condensed water from the condensed water supply device when an amount of water in the water storage tank measured by the water amount sensor falls down or exceeds preset values.

Therefore, an amount of water in the water storage tank in the scrubber can be always maintained at an appropriate amount by the following operations: when an amount of water in the water storage tank in the scrubber falls down a preset value, the control device operates the condensed water supply device to supply condensed water generated in the cooler to the scrubber; and when an amount of water in the water storage tank in the scrubber exceeds a preset value, the control device stops the condensed water supply device.

Advantageously, the air pollution control device further comprises a fresh water supply device that supplies fresh water to the scrubber. The control device operates the fresh water supply device when an amount of water in the water storage tank measured by the water amount sensor does not increase even when the condensed water supply device is operated.

Therefore, an amount of water in the water storage tank in the scrubber can be always maintained at an appropriate amount by operating the fresh water supply device when an amount of water in the water storage tank in the scrubber exceeds a preset value and the amount of water in the water storage tank does not increase, and by stopping the fresh water supply device when an amount of water increases beyond a preset value.

Advantageously, in the air pollution control device, the scrubber is configured to remove soot dust in the exhaust gas or remove SOx in the exhaust gas.

Therefore, the scrubber can appropriately remove soot dust and SOx in an exhaust gas.

Advantageously, in the air pollution control device, the scrubber includes a soot dust removal scrubber that removes soot dust in the exhaust gas and a SOx removal scrubber that removes SOx in the exhaust gas, and the water storage tank stores wastewater from the soot dust removal scrubber and the SOx removal scrubber.

Therefore, by sharing the water storage tank between the soot dust removal scrubber and the SOx removal scrubber, reduction in size and cost of the device can be realized.

Advantageously, the air pollution control device comprises any one of the above described air pollution control device.

Therefore, an increase in size and cost of the device can be suppressed by effectively using treated water.

According to the method in accordance with the present invention, an increase in size and cost of the device can be suppressed by effectively using treated water.

### Advantageous Effects of Invention

According to the air pollution control device, the ship, and the water supply method of the present invention, a condensed water supply device is provided which supplies to a scrubber condensed water generated by cooling a mixture gas by a cooler so that an increase in size and cost of a device can be suppressed by effectively using treated water.

### Brief Description of Drawings

FIG. 1 is a diagram schematically illustrating a configuration of an air pollution control device according to a first embodiment.
FIG. 2 is a flowchart illustrating a flow of processing performed by the air pollution control device according to the first embodiment.
FIG. 3 is a schematic diagram for stating water supply control over a water storage unit.
FIG. 4 is a diagram schematically illustrating a configuration of an air pollution control device according to a second embodiment.

### Description of Embodiments

Hereinbelow, preferable embodiments of the air pollution control device, the ship, and the water supply method according to the present invention will be described in detail with reference to the attached drawings. The present invention is not limited to the embodiments, and when there is a plurality of embodiments, the present invention encompasses those configured by combining each of the embodiments.

### [First Embodiment]

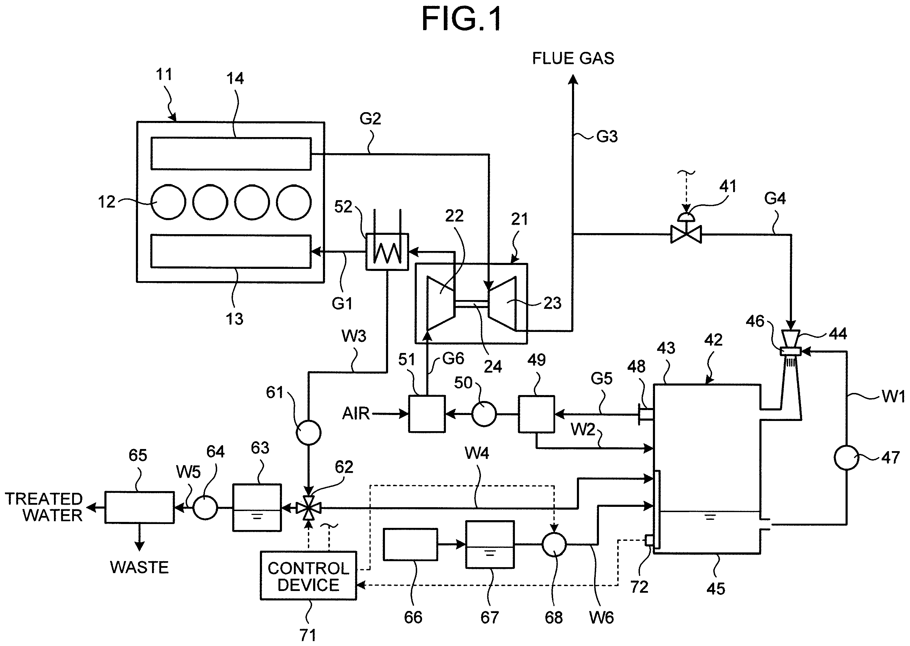

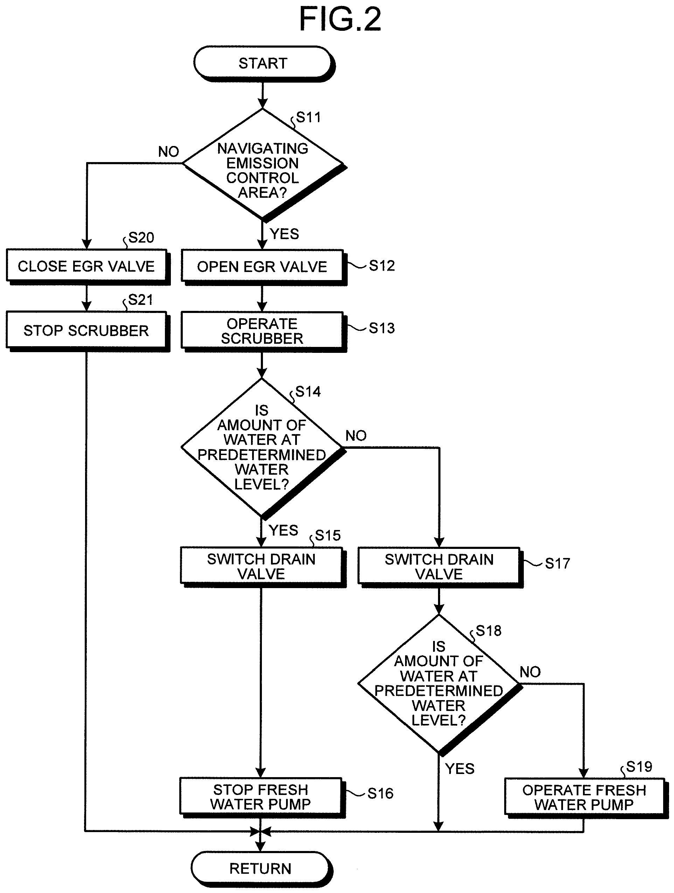

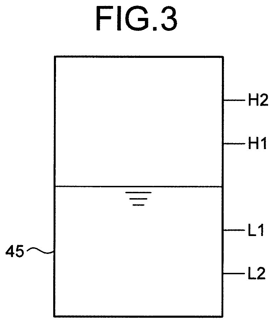

FIG. 1 is a diagram schematically illustrating a configuration of an air pollution control device according to a first embodiment, FIG. 2 is a flowchart illustrating a flow of processing performed by the air pollution control device according to the first embodiment, and FIG. 3 is a schematic diagram for stating water supply control over a water storage unit.

The air pollution control device according to the first embodiment is a device with which a part of an exhaust gas discharged from a marine diesel engine is mixed with air and the mixed gas is compressed by a turbocharger and recirculated to the marine diesel engine as a mixture gas, and a toxic substance is removed from the recirculating exhaust gas at the time of the recirculation.

In the air pollution control device according to the first embodiment, as illustrated in FIG. 1, a marine diesel engine 11 is, although it is not illustrated, a propulsion engine (main engine) which drives and rotates a propulsion propeller through a propeller shaft. The marine diesel engine 11 is a uniflow scavenging diesel engine, and a two-stroke diesel engine, in which a flow of intake/exhaust gas in a cylinder is adjusted to be in one direction from bottom upward, thereby preventing the exhausted gas from remaining. The diesel engine 11 includes a cylinder (combustion chamber) 12, a scavenging chamber 13, and an exhaust port 14. In the cylinder 12, a piston moves vertically. The scavenging chamber 13 communicates with the cylinder 12. The exhaust port 14 communicates with the cylinder 12 and is provided with an exhaust valve. In the diesel engine 11, an air supply line G1 is connected to the scavenging chamber 13, and an exhaust line G2 is connected to the exhaust port 14.

A turbocharger 21 includes a compressor 22 and a turbine 23 which are coupled to each other so as to be integrally rotated by a rotation shaft 24. In the turbocharger 21, an exhaust gas discharged from the exhaust line G2 of the diesel engine 11 rotates the turbine 23, the rotation of the turbine 23 is transmitted by the rotation shaft 24 to rotate the compressor 22, and the compressor 22 compresses air and/or a recirculation gas and supplies the air and/or the gas to the diesel engine 11 through the air supply line G1.

To the turbocharger 21, an exhaust line G3 is connected through which the exhaust gas that has rotated the turbine 23 is discharged. The exhaust line G3 is connected to a stack (funnel) not illustrated. An exhaust gas recirculation line G4 diverges from the exhaust line G3. The exhaust gas recirculation line G4 includes an EGR valve (flow rate control valve) 41, and is connected to a scrubber (a scrubber capable of removing SOx and soot dust) 42. The EGR valve 41 adjusts a flow rate of an exhaust gas flowing through the exhaust gas recirculation line G4. The scrubber 42 injects water into an exhaust gas, thereby removing a toxic substance such as SOx and soot dust included therein. Although a Venturi scrubber is employed in the embodiment, there is no limitation to the configuration.

The scrubber 42 includes a main body 43 formed in a hollow shape, a Venturi unit 44 into which the exhaust gas is introduced, and a water storage unit (water storage tank) 45 for storing wastewater. The scrubber 42 includes a water injection unit 46 which injects water into an exhaust gas introduced into the Venturi unit 44. The scrubber 42 is provided with a wastewater circulation line W1 which circulates the wastewater in the water storage unit 45 to the water injection unit 46, and the wastewater circulation line W1 includes a pump 47. The scrubber 42 includes a gas discharge unit 48 which discharges the exhaust gas from which a toxic substance has been removed, and a gas discharge line G5 is connected thereto. The gas discharge line G5 includes a mist separator (mist eliminator) 49 and a blower (blowing machine) 50, and is connected to a mixing device (mixer) 51.

The blower 50 discharges the exhaust gas in the scrubber 42 to the gas discharge line G5 from the gas discharge unit 48. The mist separator 49 separates a droplet having a small diameter included in an exhaust gas from which a toxic substance has been removed by water injection. The separated water thus separated is returned to the water storage unit 45 in the scrubber 42 through a separated water line W2. The mixing device (mixer) 51 mixes air incoming from outside air and the exhaust gas (recirculation gas) from the gas discharge line G5 to generate a mixture gas. The mixing device (mixer) 51 is provided with a combustion air supply line G6 through which the mixture gas is supplied to the compressor 22 of the turbocharger 21. The turbocharger 21 is capable of supplying the mixture gas compressed by the compressor 22 to the diesel engine 11 through the air supply line G1. The air supply line G1 includes an air cooler (cooler) 52. The air cooler 52 cools the mixture gas which has been compressed by the compressor 22 to have an increased temperature, by heat exchange with cooling water.

The air cooler 52 cools the mixture gas at a high temperature to reduce the temperature and pressure thereof. Consequently, water vapor included therein condenses to generate condensed water (drain water). The air cooler 52 is provided with a drain water discharge line W3 through which the generated drain water is discharged. The drain water discharge line W3 includes a drain water pump 61. The drain water discharge line W3 is coupled to a drain water supply line (condensed water supply line) W4 and a drain water treatment line W5 through a drain valve 62.

The drain water supply line W4 is connected to the scrubber 42. The drain water treatment line W5 includes a drain water tank 63 and a pump 64, and is connected to a treatment device 65. The treatment device 65 removes, from drain water, oils such as a lubricant oil and a system oil of the diesel engine 11. Treated water is discharged as it is, and separated wastes are stored in a container for wastes not illustrated.

In a ship, a water generator 66 for generating fresh water is mounted, and a fresh water tank 67 which stores fresh water generated by the water generator 66 is connected thereto. The fresh water tank 67 is coupled to the scrubber 42 through a fresh water supply line W6, and the fresh water supply line W6 includes a fresh water pump 68.

A control device 71 is capable of controlling the EGR valve 41, the drain valve 62, and the fresh water pump 68. The control device 71 controls opening and closing of the EGR valve 41 according to an operation condition (operation sea area) of a ship. In other words, regarding the sea area where the ship is currently under operation, when it is not a sea area designated as a NOx emission control area where an amount of NOx emission is controlled, the control device 71 closes the EGR valve 41, and when it is a sea area designated as a NOx emission control area, the control device 71 opens the EGR valve 41.

The control device 71 controls the drain valve 62 and the fresh water pump 68 according to an amount of wastewater in the scrubber 42. In other words, since the scrubber 42 removes a toxic substance by injecting water into an exhaust gas, a part of injected water is turned into water vapor by the exhaust gas at a high temperature, and is taken away by the exhaust gas. In the scrubber 42, wastewater in the water storage unit 45 is cleaned with a filter (not illustrated), and therefore, a part of the wastewater is taken away together with waste. Therefore, it is necessary to periodically replenish water for injection to the scrubber 42.

The scrubber 42 includes a water amount sensor 72 which measures an amount of wastewater stored in the water storage unit 45. When an amount of water in the water storage unit 45 measured by the water amount sensor 72 decreases beyond a preset lower limit, the control device 71 switches the drain valve 62 to supply drain water, which has been discharged from the air cooler 52 to the drain water discharge line W3, to the water storage unit 45 in the scrubber 42 through the drain water supply line W4. On the other hand, when an amount of water in the water storage unit 45 measured by the water amount sensor 72 increases beyond a preset upper limit, the control device 71 switches the drain valve 62 to supply drain water, which has been discharged from the air cooler 52 to the drain water discharge line W3, to the drain water tank 63 (treatment device 65) through the drain water treatment line W5.

In addition, when an amount of water in the water storage unit 45 is measured and found not to increase even when the control device 71 has switched the drain valve 62 to supply the drain water to the water storage unit 45 in the scrubber 42 through the drain water supply line W4, the control device 71 operates the fresh water pump 68 to supply fresh water stored in the fresh water tank 67 to the water storage unit 45 in the scrubber 42 through the fresh water supply line W6. Thereafter, when the amount of water in the water storage unit 45 measured by the water amount sensor 72 increases beyond the upper limit, the control device 71 stops the operation of the fresh water pump 68 to stop supplying the fresh water to the water storage unit 45 in the scrubber 42 through the fresh water supply line W6. At that time, the supply of the drain water to the water storage unit 45 through the drain water supply line W4 is also stopped by switching the drain valve 62.

The condensed water supply device according to the present invention includes the drain water discharge line W3, the drain water pump 61, the drain valve 62, and the drain water supply line W4. The fresh water supply device according to the present invention includes the fresh water supply line W6 and the fresh water pump 68.

Here, a function of the air pollution control device according to the first embodiment is described.

In the air pollution control device according to the first embodiment, when combustion air is supplied to the cylinder 12 from the scavenging chamber 13 in the marine diesel engine 11, the combustion air is compressed by a piston, and a fuel is injected into the air at a high temperature to cause spontaneous ignition and combustion. The combustion gas thus generated is discharged as an exhaust gas to the exhaust line G2 from the exhaust port 14. The exhaust gas discharged from the marine diesel engine 11 rotates the turbine 23 in the turbocharger 21, and then is discharged to the exhaust line G3. When the EGR valve 41 is closed, a whole amount of the exhaust gas is discharged outside from the exhaust line G3.

On the other hand, when the EGR valve 41 is opened, a part of the exhaust gas flows into the exhaust gas recirculation line G4 from the exhaust line G3. With regard to the exhaust gas which has flowed into the exhaust gas recirculation line G4, a toxic substance such as SOx and soot dust included therein is removed by the scrubber 42. In other words, water is injected into the exhaust gas from the water injection unit 46 while the exhaust gas flows through the Venturi unit 44 at a high speed in the scrubber 42, whereby the exhaust gas is cooled by the water, and SOx and particulate matter (PM) such as soot dust drop with the water and are removed. The water including SOx, soot dust, and the like is stored in the water storage unit 45, and is returned, by the pump 47, to the water injection unit 46 through the wastewater circulation line W1.

The exhaust gas from which the toxic substance has been removed by the scrubber 42 is discharged to the gas discharge line G5 from the gas discharge unit 48. After droplets having a small diameter included in the exhaust gas are separated by the mist separator 49, the obtained gas is mixed with incoming air in the mixing device 51 and prepared as a mixture gas. The mixture gas flows through the combustion air supply line G6 and is compressed by the compressor 22 in the turbocharger 21. Subsequently, the mixture gas is cooled by the air cooler 52, and supplied to the diesel engine 11 through the air supply line G1.

The mixture gas at a high temperature is cooled by the air cooler 52, whereby water vapor is condensed to generate drain water. The drain water is discharged to the drain water discharge line W3. Since the drain water includes oil, usually, the drain water flows from the drain water discharge line W3 to the drain water treatment line W5, is stored in the drain water tank 63, and then is subjected to a purification treatment performed by the treatment device 65.

The control device 71 controls the drain valve 62 and the fresh water pump 68 according to an amount of wastewater in the scrubber 42. Here, the control of an amount of water stored in the scrubber 42, which is performed by the control device 71, is described in detail with the use of the flowchart.

As illustrated in FIGS. 1 and 2, whether a ship is navigating a sea area designated as a NOx emission control area is determined in step S11. When it has been determined here that the ship is navigating a sea area designated as a NOx emission control area (YES), the EGR valve 41 is opened in step S12 and the scrubber 42 is operated in step S13. On the other hand, when it has been determined that the ship is not navigating a sea area designated as a NOx emission control area (NO), the EGR valve 41 is closed in step S20 and the scrubber 42 is stopped in step S21.

In step S14, it is determined whether an amount of water in the water storage unit 45 in the scrubber 42 measured by the water amount sensor 72 is at a predetermined water level (equal to or higher than the lower limit). When it has been determined here that the amount of water in the water storage unit 45 in the scrubber 42 is at the predetermined water level (equal to or higher than the lower limit) (YES), the drain water discharge line W3 and the drain water treatment line W5 are caused to communicate with each other by the drain valve 62 in step S15, and the fresh water pump 68 is stopped in step S16. On the other hand, when it has been determined that the amount of water in the water storage unit 45 in the scrubber 42 is not at the predetermined water level (lower than the lower limit) (NO), the drain water discharge line W3 and the drain water supply line W4 are caused to communicate with each other by the drain valve 62 in step S17.

Consequently, by switching the drain valve 62 to cause the drain water discharge line W3 and the drain water supply line W4 to communicate with each other, the drain water discharged from the air cooler 52 to the drain water discharge line W3 is supplied to the water storage unit 45 in the scrubber 42 through the drain water supply line W4. As a result, the amount of water in the water storage unit 45 increases.

In addition, in step S18, it is determined again whether the amount of water in the water storage unit 45 in the scrubber 42 measured by the water amount sensor 72 is at the predetermined water level (equal to or higher than the lower limit). In a case where an amount of water consumed in the scrubber 42 is large, the amount of water in the water storage unit 45 does not increase even when the drain water from the air cooler 52 has been supplied to the water storage unit 45 through the drain water supply line W4. Therefore, when it has been determined that the amount of water in the water storage unit 45 in the scrubber 42 is at the predetermined water level (equal to or higher than the lower limit) (YES), the treatment is terminated. On the other hand, when it has been determined that the amount of water in the water storage unit 45 in the scrubber 42 is not at the predetermined water level (lower than the lower limit) (NO), the fresh water pump 68 is operated in step S19. Consequently, fresh water stored in the fresh water tank 67 is supplied by the fresh water pump 68 to the water storage unit 45 in the scrubber 42 through the fresh water supply line W6. As a result, the amount of water in the water storage unit 45 increases.

Thereafter, when it has been determined in step S14 that the amount of water in the water storage unit 45 has increased and is at the predetermined water level (YES), the drain water discharge line W3 and the drain water treatment line W5 are caused to communicate with each other by the drain valve 62 in step S15, and the fresh water pump 68 is stopped in step S16. When it has been determined in step S11 that the ship has been out of the sea area designated as a NOx emission control area (NO), the EGR valve 41 is closed in step S20, and the scrubber 42 is stopped in step S21.

In fact, an upper limit and a lower limit are set for the amount of water in the water storage unit 45. When the amount of water in the water storage unit 45 measured by the water amount sensor 72 increases beyond the upper limit, the control device 71 switches the drain valve 62, or stops the operation of the fresh water pump 68.

For example, as illustrated in FIG. 3, upper limits H1 and H2, as well as lower limits L1 and L2 are set for the water level in the water storage unit 45. The upper limits satisfy the expression H1 < H2, and the lower limits satisfy the expression L1 > L2. The water levels satisfy the expression H2 > H1 > L1 > L2. Here, when the initial water level in the water storage unit 45 is between the lower limit L1 and the upper limit H1, supply of drain water or still water is being stopped.

When water is taken away by the recirculation gas and whereby the water level lowers to the lower limit L1, supply of drain water is started at a time point when the water level has lowered beyond the lower limit L1 (L1 to L2). In a case where an amount of the drain water supplied is larger than an amount of the water taken away, the water level rises. At a time point when the water level has reached the upper limit H2 (H1 to H2), the supply of drain water is stopped. On the other hand, in a case where the amount of the drain water supplied is smaller than the amount of the water taken away, the water level lowers. At a time point when the water level has reached the lower limit L2 (L1 to L2), supply of fresh water is started. Then, when the water level has risen and reached the upper limit H1 (L1 to H1), the supply of fresh water is stopped. In a case where an operation condition, temperature, and humidity have varied, the amount of the water taken away and the amount of the drain water also vary. It is difficult to determine at this time point that the drain water is smaller than the amount of the water taken away. Accordingly, drain water is supplied. In a case where the amount of the drain water supplied is larger than the amount of the water taken away, the water level rises. At a time point when the water level has risen to the upper limit H2, the supply of drain water is stopped. On the other hand, in a case where the amount of the drain water supplied is smaller than the amount of the water taken away, the water level lowers.

With the use of the control method described above, supply and stillness of drain water and fresh water can be easily controlled. When only one lower limit has been set, it is necessary to determine whether the drain water alone can make up for a shortage, and to compare an amount of the water taken away with an amount of the drain water. However, the water taken away is in a form of water vapor, and therefore, measurement thereof is difficult. Alternatively, a water level may be measured for the determination. However, since it is necessary to measure the water level with high accuracy and to determine whether the water level rises or lowers, the control thereof is complicated. In the embodiment, the upper limits H1 and H2, as well as the lower limits L1 and L2 are set. Consequently, all that is required is ON/OFF control, which makes determination and control of the water level easier.

As described above, the air pollution control device according to the first embodiment includes the exhaust gas recirculation line G4, the scrubber 42, the air cooler 52, and the drain water supply line W4. Through the exhaust gas recirculation line G4, a part of an exhaust gas discharged from the marine diesel engine 11 is mixed with air and then the mixed gas is compressed by the turbocharger 21 and recirculated to the marine diesel engine 11 as a mixture gas. The scrubber 42 injects water into the exhaust gas which flows through the exhaust gas recirculation line G4 to remove a toxic substance. The air cooler 52 cools the mixture gas which has been subjected to the removal of the toxic substance by the scrubber 42 and then compressed by the compressor 22. Through the drain water supply line W4, drain water generated by the cooling of the mixture gas by the air cooler 52 is supplied to the scrubber 42.

Therefore, a part of the exhaust gas discharged from the marine diesel engine 11 flows through the exhaust gas recirculation line G4, is compressed by the turbocharger 21 and recirculated to the marine diesel engine 11 as a mixture gas. The scrubber 42 injects water into the exhaust gas which flows through the exhaust gas recirculation line G4 to remove a toxic substance. The air cooler 52 cools the mixture gas which has been subjected to the removal of the toxic substance and then compressed by the compressor 22. At that time, the air cooler 52 cools the mixture gas, thereby generating drain water. Then, the drain water is supplied to the scrubber 42 through the drain water supply line W4. Therefore, a shortage of water in the scrubber 42 is alleviated by the supply of the drain water, and an increase in size and cost of the device can be suppressed by effectively using treated water.

The air pollution control device according to the first embodiment includes the water storage unit 45, the water amount sensor 72, and the control device 71. The water storage unit 45 stores water injected into the exhaust gas in the scrubber 42. The water amount sensor 72 measures an amount of water in the water storage unit 45. The control device 71 supplies drain water to the water storage unit 45 through the drain water supply line W4, by switching the drain valve 62 when the amount of water in the water storage unit 45 measured by the water amount sensor 72 decreases beyond a preset lower limit. Therefore, an amount of water in the water storage unit 45 in the scrubber 42 can be always maintained at an appropriate level.

The air pollution control device according to the first embodiment includes the fresh water supply line W6 and the fresh water pump 68 with which fresh water is supplied to the scrubber 42. When the amount of water in the water storage unit 45 does not increase even when the drain water has been supplied to the water storage unit 45 through the drain water supply line W4, the control device 71 operates the fresh water pump 68 to supply the fresh water to the water storage unit 45 through the fresh water supply line W6. Consequently, even when an amount of the drain water is insufficient, an amount of water in the water storage unit 45 in the scrubber 42 can be always maintained at an appropriate level by using the fresh water.

### [Second Embodiment]

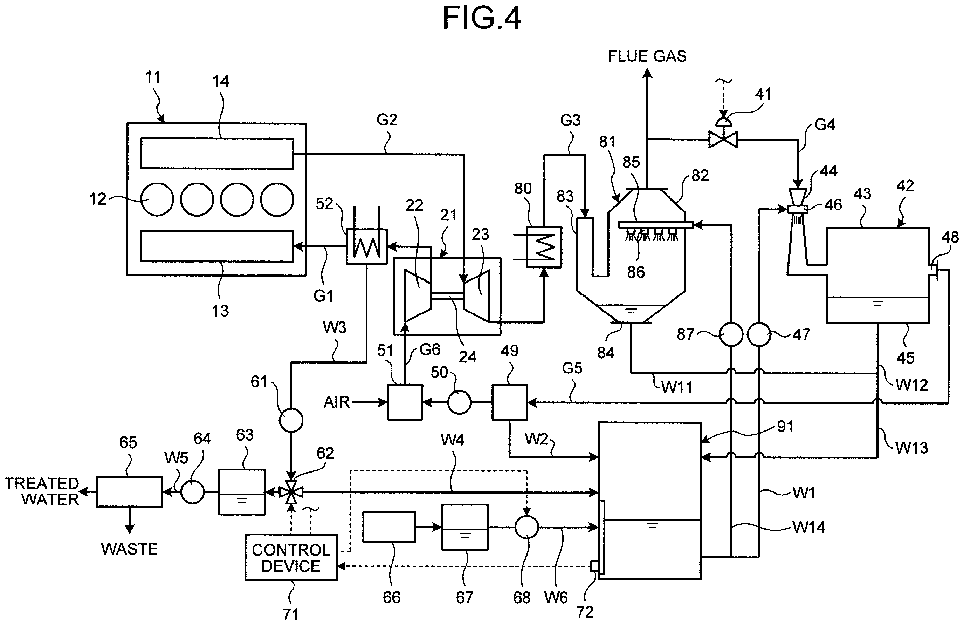

FIG. 4 is a diagram schematically illustrating a configuration of an air pollution control device according to a second embodiment. For members having the same function as those in the embodiment described above, the same reference numerals are attached thereto, and detailed description thereof will be omitted.

In the air pollution control device according to the second embodiment, as illustrated in FIG. 4, an air supply line G1 is connected to a scavenging chamber 13, and an exhaust line G2 is connected to an exhaust port 14 in a marine diesel engine 11. A turbocharger 21 includes a compressor 22 and a turbine 23, and an exhaust line G3 is connected to the turbine 23. The exhaust line G3 includes an economizer (fuel economizer) 80, and is connected to a first scrubber (SOx removal scrubber) 81. The first scrubber 81 injects water into an exhaust gas, thereby removing a toxic substance such as SOx and soot dust included therein.

The first scrubber 81 includes a main body 82 formed in a hollow shape, an introducing unit 83 into which an exhaust gas is introduced, and a water storage unit 84 for storing wastewater. The first scrubber 81 includes a water injection unit 85 which injects water into an exhaust gas introduced into the main body 82, and a plurality of injection nozzles 86. The first scrubber 81 includes a gas discharge unit 82 which discharges an exhaust gas from which a toxic substance has been removed, and a gas discharge line G3 is connected thereto.

The exhaust line G3 located at the downstream side of the first scrubber 81. is connected to a stack (funnel) not illustrated. An exhaust gas recirculation line G4 diverges from the exhaust line G3. The exhaust gas recirculation line G4 includes an EGR valve 41, and is connected to a second scrubber (soot dust removal scrubber) 42. The second scrubber 42 injects water into an exhaust gas, thereby removing a toxic substance such as SOx and soot dust included therein.

The second scrubber 42 includes a main body 43, a Venturi unit 44, a water storage unit 45, and a water injection unit 46. In the second scrubber 42, the gas discharge line G5 is connected to the gas discharge unit 48. The gas discharge line G5 includes a mist separator 49 and a blower 50, and is connected to a mixing device 51. The mixing device 51 mixes air incoming from outside air and an exhaust gas (recirculation gas) to generate a mixture gas, and is coupled to the compressor 22 through a combustion air supply line G6. The compressor 22 is capable of supplying compressed combustion air from the air supply line G1 to the diesel engine 11. An air cooler (cooler) 52 is provided in the air supply line G1. The air cooler 52 cools the mixture gas which has been compressed by the compressor 22 to have an increased temperature, by heat exchange with cooling water.

A water storage tank 91 stores wastewater in the first and second scrubbers 81 and 42. In other words, a wastewater line W11 is connected to the first scrubber 81, and a wastewater line W12 is connected to the second scrubber 42. The wastewater in the water storage unit 84 is discharged through the wastewater line W11, and the wastewater in the water storage unit 45 is discharged through the wastewater line W12. The wastewater lines W11 and W12 join together to form a wastewater line W13, and the wastewater line W13 is connected to the water storage tank 91. Therefore, the wastewater in the water storage unit 84 in the first scrubber 81 is discharged to the wastewater line W11, the wastewater in the water storage unit 45 in the second scrubber 42 is discharged to the wastewater line W12, and the wastewater in each of the wastewater lines W11 and W12 is discharged through the wastewater line W13 to the water storage tank 91, and stored therein. The first scrubber 81 is provided with a wastewater circulation line W14 which circulates wastewater in the water storage tank 91 to the water injection unit 85. The wastewater circulation line W14 includes a pump 87. The second scrubber 42 is provided with a wastewater circulation line W1 which circulates wastewater in the water storage tank 91 to the water injection unit 46. The wastewater circulation line W1 includes a pump 47.

The air cooler 52 cools the mixture gas at a high temperature to reduce the temperature and pressure thereof. Consequently, water vapor included therein condenses to generate condensed water (drain water). The air cooler 52 is provided with a drain water discharge line W3 through which the generated drain water is discharged. The drain water discharge line W3 includes a drain water pump 61. The drain water discharge line W3 is coupled to a drain water supply line W4 and a drain water treatment line W5 through a drain valve 62.

The drain water supply line W4 is connected to the water storage tank 91. The drain water treatment line W5 includes a drain water tank 63 and a blower 64, and is connected to a treatment device 65. In a ship, a water generator 66 for generating fresh water is mounted, and a fresh water tank 67 which stores fresh water generated by the water generator 66 is connected thereto. The fresh water tank 67 is coupled to the water storage tank 91 through a fresh water supply line W6, and the fresh water supply line W6 includes a fresh water pump 68.

A control device 71 is capable of controlling the drain valve 62 and the fresh water pump 68. The control device 71 controls the drain valve 62 and the fresh water pump 68 according to an amount of wastewater in the water storage tank 91. In other words, each of the scrubbers 81 and 42 removes a toxic substance by injecting water into an exhaust gas. Therefore, a part of injected water is turned into water vapor by the exhaust gas at a high temperature, and is taken away by the exhaust gas. Wastewater in the water storage units 84 and 45 in the scrubbers 81 and 42, respectively, is cleaned with a filter (not illustrated), and therefore, a part of the wastewater is taken away together with waste. Accordingly, it is necessary to periodically replenish water for injection to each of the scrubbers 81 and 42.

The water storage tank 91 includes a water amount sensor 72 for measuring an amount of wastewater stored therein. When an amount of water in the water storage tank 91 measured by the water amount sensor 72 decreases beyond a preset lower limit, the control device 71 switches the drain valve 62 to supply drain water, which has been discharged from the air cooler 52 to the drain water discharge line W3, to the water storage unit 45 in the second scrubber 42 through the drain water supply line W4. On the other hand, when an amount of water in the water storage tank 91 measured by the water amount sensor 72 increases beyond a preset upper limit, the control device 71 switches the drain valve 62 to supply drain water, which has been discharged from the air cooler 52 to the drain water discharge line W3, to the drain water tank 63 (treatment device 65) through the drain water treatment line W5.

In addition, when a measured amount of water in the water storage tank 91 does not increase even when the control device 71 has switched the drain valve 62 to supply the drain water to the water storage tank 91 in the scrubber 42 through the drain water supply line W4, the control device 71 operates the fresh water pump 68 to supply fresh water stored in the fresh water tank 67 to the water storage tank 91 through the fresh water supply line W6. Thereafter, when the amount of water in the water storage tank 91 measured by the water amount sensor 72 increases beyond the upper limit, the control device 71 stops the operation of the fresh water pump 68 to stop supplying the fresh water to the water storage tank 91 through the fresh water supply line W6. At that time, the supply of drain water to the water storage tank 91 through the drain water supply line W4 is also stopped by switching the drain valve 62.

Here, a function of the air pollution control device according to the second embodiment is described.

In the air pollution control device according to the second embodiment, the exhaust gas discharged from the marine diesel engine 11 rotates the turbine 23 in the turbocharger 21, and then is discharged to the exhaust line G3. When the EGR valve 41 is closed, a whole amount of the exhaust gas is discharged outside from the exhaust line G3.

On the other hand, when the EGR valve 41 is opened, a toxic substance such as SOx and soot dust included in the exhaust gas is removed by the first scrubber 81. In other words, by injecting water into the exhaust gas from each of the water injection nozzles 86 of the water injection unit 85 while the exhaust gas is rising in the main body in the first scrubber 81, the exhaust gas is cooled by the water, and SOx and particulate matter (PM) such as soot dust drop with the water and are removed. Then, the water including SOx, soot dust, and the like is stored in the water storage unit 84.

A part of the exhaust gas, from which SOx, soot dust, and the like have been removed by the first scrubber 81, flows into the exhaust gas recirculation line G4 from the exhaust line G3. With regard to the exhaust gas which has flowed into the exhaust gas recirculation line G4, a toxic substance such as soot dust included therein is removed by the second scrubber 42. In other words, by injecting water into the exhaust gas from the water injection unit 46 while the exhaust gas flows through the Venturi unit 44 at a high speed in the second scrubber 42, the exhaust gas is cooled by the water, and particulate matter (PM) such as soot dust drops with the water and is removed.

At that time, wastewater in the water storage unit 84 in the first scrubber 81 is discharged to the wastewater line W11, wastewater in the water storage unit 45 in the second scrubber 42 is discharged to the wastewater line W12, and wastewater in each of the wastewater lines W11 and W12 is discharged through the wastewater line W13 to the water storage tank 91, and stored therein. Consequently, with regard to the first scrubber 81, water in the water storage tank 91 is returned by the pump 87 to the water injection unit 86 through the wastewater circulation line W14, and with regard to the second scrubber 42, water in the water storage tank 91 is returned by the pump 47 to the water injection unit 46 through the wastewater circulation line W1.

The exhaust gas from which the toxic substance has been removed by the second scrubber 42 is discharged to the gas discharge line G5. After moisture is separated from the exhaust gas by the mist separator 49, the obtained gas is mixed with incoming air in the mixing device 51 and prepared as combustion air. The combustion air flows through the combustion air supply line G6 and is compressed by the compressor 22 in the turbocharger 21. Subsequently, the combustion air is cooled by the air cooler 52, and supplied to the diesel engine 11 through the air supply line G1.

The mixture gas at a high temperature is cooled by the air cooler 52, whereby water vapor is condensed to generate drain water. The drain water is discharged to the drain water discharge line W3. The drain water flows from the drain water discharge line W3 to the drain water treatment line W5, is stored in the drain water tank 63, and then is subjected to a purification treatment performed by the treatment device 65.

The control device 71 controls the drain valve 62 and the fresh water pump 68 according to an amount of wastewater in the water storage tank 91. In other words, when the amount of water in the water storage tank 91 measured by the water amount sensor 72 is not at a predetermined water level (lower than the lower limit), the drain water discharge line W3 and the drain water supply line W4 are caused to communicate with each other by the drain valve 62. Consequently, by switching the drain valve 62 to cause the drain water discharge line W3 and the drain water supply line W4 to communicate with each other, the drain water discharged from the air cooler 52 to the drain water discharge line W3 is supplied to the water storage tank 91 through the drain water supply line W4. As a result, the amount of water in the water storage tank 91 increases.

In a case where an amount of water consumed in each of the scrubbers 81 and 42 is large, the amount of water in the water storage tank 91 does not increase even when the drain water from the air cooler 52 has been supplied to the water storage tank 91 through the drain water supply line W4. Therefore, on that occasion, the control device 71 operates the fresh water pump 68. Consequently, fresh water stored in the fresh water tank 67 is supplied by the fresh water pump 68 to the water storage tank 91 through the fresh water supply line W6. As a result, the amount of water in the water storage tank 91 increases.

Thereafter, when the amount of water in the water storage tank 91 increases beyond the upper limit, the control device 71 switches the drain valve 62 and stops the operation of the fresh water pump 68 to stop supplying the drain water and the fresh water to the water storage tank 91.

As described above, the air pollution control device according to the second embodiment includes the first scrubber 81 which removes a toxic substance such as SOx and soot dust, and the second scrubber 42 which removes a toxic substance such as soot dust. In the air pollution control device, each of the water storage units 84 and 45 is coupled to the water storage tank 91 through the wastewater lines W11, W12, and W13, and when an amount of water in the water storage tank 91 measured by the water amount sensor 72 decreases beyond the preset lower limit, the drain valve 62 is switched, and thereby drain water is supplied to the water storage tank 91 through the drain water supply line W4. Therefore, an amount of water in the water storage tank 91 can be always maintained at an appropriate level. In addition, by sharing the water storage tank 91 for storing wastewater between the first scrubber 81 for removing SOx and the second scrubber 42 for removing soot dust, reduction in size and cost of the device can be realized.

In the embodiments, description has been given using a main engine as an example of the marine diesel engine. However, the same is applied to a diesel engine used as a power generator.

The configuration of each of the scrubbers 42 and 81 described in the embodiments is only an example, and other configuration may be employed.

In addition, although the drain water pump 61 is provided in the drain water discharge line W3 in the embodiments, the drain water pump 61 may be omitted since the pressure of the combustion air is high.

In addition, although the water storage tank 91 for storing wastewater is shared between the first scrubber 81 for removing SOx and the second scrubber 42 for removing soot dust in the second embodiment, the water storage tank 91 may be provided for each of the scrubbers.

### Reference Signs List

11 Marine diesel engine
21 Turbocharger
41 EGR valve
42 Scrubber, Second scrubber
45 Water storage unit (Water storage tank)
52 Air cooler (Cooler)
62 Drain valve (Condensed water supply device)
66 Water generator
67 Fresh water tank
68 Fresh water pump (Fresh water supply device)
71 Control device
72 Water amount sensor
81 First scrubber
G4 Exhaust gas recirculation line
W3 Drain water discharge line (Condensed water supply device)
W4 Drain water supply line (Condensed water supply device)
W6 Fresh water supply line (Fresh water supply device)
W11, W12, W13 Wastewater line

## Claims

1. An air pollution control device, comprising:
an exhaust gas recirculation line (G4) through which a part of an exhaust gas discharged from a marine engine (11) is recirculated to the marine engine (11) as a recirculation gas;
a scrubber (42) that is configured to inject water into the recirculation gas flowing through the exhaust gas recirculation line (G4) to remove a toxic substance; and
a mixing device (51) configured to generate a mixture gas by mixing air incoming from outside air and the recirculation gas discharged from the scrubber (42); **characterized in that** the device further comprises:
a turbocharger (21) configured to compress the mixture gas;
a cooler (52) that is configured to cool the mixture gas supplied from the turbocharger (21); and
a condensed water supply device (62, W3, W4) that is configured to supply to the scrubber (42) a condensed water generated by cooling the mixture gas in the cooler; wherein
the mixing device (51) is disposed between the scrubber (42) and the turbocharger (21).

2. The air pollution control device according to claim 1, further comprising:
a water storage tank (45) that stores water injected into the exhaust gas;
a water amount sensor (72) that measures an amount of water in the water storage tank (45); and
a control device (71) that starts supply of condensed water from the condensed water supply device (62, W3, W4) when an amount of water in the water storage tank (45) measured by the water amount sensor (72) lowers and falls below a lower preset value, and stops supply of condensed water from the condensed water supply device (62, W3, W4) when the amount of water in the water storage tank (45) measured by the water amount sensor (72) rises and exceeds an upper preset value.

3. The air pollution control device according to claim 2, further comprising a fresh water supply device (68, W6) that supplies fresh water to the scrubber (42), wherein
the control device (71) operates the fresh water supply device (68, W6) when an amount of water in the water storage tank (45) measured by the water amount sensor (72) does not increase even when the condensed water supply device (62, W3, W4) is operated.

4. The air pollution control device according to any one of claims 1 to 3, wherein the scrubber (42) is configured to remove soot dust in the exhaust gas or remove SOx in the exhaust gas.

5. The air pollution control device according to claim 2 or 3, wherein
the scrubber (42) includes a soot dust removal scrubber that removes soot dust in the exhaust gas and a SOx removal scrubber that removes SOx in the exhaust gas, and
the water storage tank (45) stores wastewater from the soot dust removal scrubber and the SOx removal scrubber.

6. The air pollution control device according to any one of claims 1 or 5, wherein
the condensed water supply device (62, W3, W4) includes a drain water line to the scrubber (42) from the cooler (52), a drain valve (62) disposed on the drain water line, a drain water treatment line (W5) of which an end is connected the drain valve (62), and a drain water tank (63) disposed on the drain water treatment line (W5).

7. A ship comprising the air pollution control device according to any one of claims 1 to 6.

8. A water supply method for supplying water to be injected into an exhaust gas discharged from a marine engine (11), the method comprising:
recirculating a part of the exhaust gas discharged from the marine engine (11) as a recirculation gas;
injecting water into the recirculation gas to remove a toxic substance; and
generating a mixture gas by mixing air incoming from outside air and the recirculation gas after the injecting; **characterized by** further comprising the steps of:
compressing the mixture gas;
cooling the mixture gas after the compressing; and
supplying a condensed water generated by cooling the mixture gas as the water to be injected in the injecting.

## Patentansprüche

1. Vorrichtung zur Kontrolle von Luftverschmutzung, umfassend:
eine Abgas-Rückführleitung (G4), durch die ein Teil eines Abgases, das von einem Schiffsmotor (11) ausgestoßen wird, zum Schiffsmotor (11) als ein Rückführgas rückgeführt wird;
einen Wäscher (42), der konfiguriert ist, um Wasser in das Rückführgas, das durch die Abgas-Rückführleitung (G4) strömt, einzuspritzen, um eine toxische Substanz zu entfernen; und
eine Mischvorrichtung (51), die konfiguriert ist, um durch Mischen von Luft, die von Außenluft einströmt, und des Rückführgases, das vom Wäscher (42) ausgestoßen wird, ein Mischgas zu erzeugen;
**dadurch gekennzeichnet, dass** die Vorrichtung weiter umfasst:
einen Turbolader (21), der konfiguriert ist, um das Mischgas zu verdichten;
einen Kühler (52), der konfiguriert ist, um das vom Turbolader (21) zugeführte Mischgas zu kühlen; und
eine Vorrichtung zur Zufuhr von kondensiertem Wasser (62, W3, W4), die konfiguriert ist, um dem Wäscher (42) ein kondensiertes Wasser zuzuführen, das durch Kühlen des Mischgases im Kühler erzeugt wird; wobei
die Mischvorrichtung (51) zwischen dem Wäscher (42) und dem Turbolader (21) angeordnet ist.

2. Vorrichtung zur Kontrolle von Luftverschmutzung nach Anspruch 1, weiter umfassend:
einen Wasserspeicherbehälter (45), der Wasser speichert, das in das Abgas eingespritzt wird;
einen Wassermengensensor (72), der eine Wassermenge im Wasserspeicherbehälter (45) misst; und
eine Steuervorrichtung (71), die eine Zufuhr von kondensiertem Wasser von der Vorrichtung zur Zufuhr von kondensiertem Wasser (62, W3, W4) beginnt, wenn eine Wassermenge im Wasserspeicherbehälter (45), die vom Wassermengensensor (72) gemessen wird, sinkt und unter einen unteren voreingestellten Wert fällt, und eine Zufuhr von kondensiertem Wasser von der Vorrichtung zur Zufuhr von kondensiertem Wasser (62, W3, W4) beendet, wenn die Wassermenge im Wasserspeicherbehälter (45), die vom Wassermengensensor (72) gemessen wird, steigt und einen oberen voreingestellten Wert übersteigt.

3. Vorrichtung zur Kontrolle von Luftverschmutzung nach Anspruch 2, weiter umfassend eine Vorrichtung zur Zufuhr von Frischwasser (68, W6), die dem Wäscher (42) Frischwasser zuführt, wobei
die Steuervorrichtung (71) die Vorrichtung zur Zufuhr von Frischwasser (68, W6) betreibt, wenn eine Wassermenge im Wasserspeicherbehälter (45), die vom Wassermengensensor (72) gemessen wird, selbst dann nicht zunimmt, wenn die Vorrichtung zur Zufuhr von kondensiertem Wasser (62, W3, W4) betrieben wird.

4. Vorrichtung zur Kontrolle von Luftverschmutzung nach einem der Ansprüche 1 bis 3, wobei der Wäscher (42) konfiguriert ist, um Rußstaub im Abgas zu entfernen oder SOx im Abgas zu entfernen.

5. Vorrichtung zur Kontrolle von Luftverschmutzung nach Anspruch 2 oder 3, wobei
der Wäscher (42) einen Rußstaubentfernungswäscher, der Rußstaub im Abgas entfernt, und einen SOx-Entfernungswäscher enthält, der SOx im Abgas entfernt, und
der Wasserspeicherbehälter (45) Abwasser vom Rußstaubentfernungswäscher und vom SOx-Entfernungswäscher speichert.

6. Vorrichtung zur Kontrolle von Luftverschmutzung nach einem der Ansprüche 1 oder 5, wobei
die Vorrichtung zur Zufuhr von kondensiertem Wasser (62, W3, W4) eine Abflusswasserleitung zum Wäscher (42) vom Kühler (52), ein Abflussventil (62), das an der Abflusswasserleitung angeordnet ist, eine Abflusswasseraufbereitungsleitung (W5), von der ein Ende mit dem Abflussventil (62) verbunden ist, und einen Abflusswasserbehälter (63) enthält, der an der Abflusswasseraufbereitungsleitung (W5) angeordnet ist.

7. Schiff, das die Vorrichtung zur Kontrolle von Luftverschmutzung nach einem der Ansprüche 1 bis 6 umfasst.

8. Wasserzufuhrverfahren zur Zufuhr von Wasser, das in ein Abgas, das von einem Schiffsmotor (11) ausgestoßen wird, einzuspritzen ist, wobei das Verfahren umfasst:
Rückführen eines Teils des vom Schiffsmotor (11) ausgestoßenen Abgases als ein Rückführgas;
Einspritzen von Wasser in das Rückführgas, um eine toxische Substanz zu entfernen; und
Erzeugen eines Mischgases durch Mischen von Luft, die von Außenluft einströmt, und des Rückführgases nach dem Einspritzen;
**gekennzeichnet durch** weiteres Umfassen der folgenden Schritte:
Verdichten des Mischgases;
Kühlen des Mischgases nach dem Verdichten; und
Zufuhr eines kondensierten Wassers, das durch Kühlen des Mischgases erzeugt wird, als das beim Einspritzen einzuspritzende Wasser.

## Revendications

1. Dispositif de lutte contre la pollution atmosphérique, comprenant :
une conduite de recyclage de gaz d'échappement (G4) à travers laquelle une partie d'un gaz d'échappement déchargé d'un moteur maritime (11) est recyclée vers le moteur maritime (11) en tant que gaz de recyclage ;
un épurateur (42) qui est configuré pour injecter de l'eau dans le gaz de recyclage s'écoulant à travers la conduite de recyclage de gaz d'échappement (G4) pour enlever une substance toxique ; et
un dispositif de mélange (51) configuré pour produire un gaz de mélange en mélangeant de l'air provenant de l'air extérieur et le gaz de recyclage déchargé depuis l'épurateur (42) ; **caractérisé en ce que** le dispositif comprend en outre :
un turbocompresseur (21) configuré pour comprimer le gaz de mélange ;
un refroidisseur (52) qui est configuré pour refroidir le gaz de mélange fourni en provenance du turbocompresseur (21) ; et
un dispositif d'alimentation en eau condensée (62, W3, W4) qui est configuré pour fournir à l'épurateur (42) une eau condensée produite en refroidissant le gaz de mélange dans le refroidisseur ; dans lequel
le dispositif de mélange (51) est disposé entre l'épurateur (42) et le turbocompresseur (21).

2. Dispositif de lutte contre la pollution atmosphérique selon la revendication 1, comprenant en outre :
un réservoir de stockage d'eau (45) qui stocke de l'eau injectée dans le gaz d'échappement ;
un capteur de quantité d'eau (72) qui mesure une quantité d'eau dans le réservoir de stockage d'eau (45) ; et
un dispositif de commande (71) qui commence l'alimentation en eau condensée depuis le dispositif d'alimentation en eau condensée (62, W3, W4) quand une quantité d'eau dans le réservoir de stockage d'eau (45) mesurée par le capteur de quantité d'eau (72) baisse et tombe au-dessous d'une valeur inférieure définie à l'avance, et arrête l'alimentation en eau condensée en provenance du dispositif d'alimentation en eau condensée (62, W3, W4) quand la quantité d'eau dans le réservoir de stockage d'eau (45) mesurée par le capteur de quantité d'eau (72) s'élève et dépasse une valeur supérieure définie à l'avance.

3. Dispositif de lutte contre la pollution atmosphérique selon la revendication 2, comprenant en outre un dispositif d'alimentation en eau douce (68, W6) qui fournit de l'eau douce à l'épurateur (42), dans lequel
le dispositif de commande (71) met en oeuvre le dispositif d'alimentation en eau douce (68, W6) quand une quantité d'eau dans le réservoir de stockage d'eau (45) mesurée par le capteur de quantité d'eau (72) n'augmente pas même si le dispositif d'alimentation en eau condensée (62, W3, W4) est mis en oeuvre.

4. Dispositif de lutte contre la pollution atmosphérique selon l'une quelconque des revendications 1 à 3, dans lequel l'épurateur (42) est configuré pour enlever la poussière de suie dans le gaz d'échappement ou pour enlever le SOx dans le gaz d'échappement.

5. Dispositif de lutte contre la pollution atmosphérique selon la revendication 2 ou 3, dans lequel
l'épurateur (42) inclut un épurateur d'enlèvement de poussière de suie qui enlève la poussière de suie dans le gaz d'échappement et un épurateur d'enlèvement de SOx qui enlève le SOx dans le gaz d'échappement, et
le réservoir de stockage d'eau (45) stocke les eaux usées provenant de l'épurateur d'enlèvement de poussière de suie et de l'épurateur d'enlèvement de SOx.

6. Dispositif de lutte contre la pollution atmosphérique selon l'une quelconque des revendications 1 ou 5, dans lequel
le dispositif d'alimentation en eau condensée (62, W3, W4) inclut une conduite d'eau d'écoulement vers l'épurateur (42) en provenance du refroidisseur (52), une vanne d'écoulement (62) disposée dans la conduite d'eau d'écoulement, une conduite de traitement d'eau d'écoulement (W5) dont une extrémité est reliée à la vanne d'écoulement (62), et un réservoir d'eau d'écoulement (63) disposé sur la conduite de traitement d'eau d'écoulement (W5).

7. Navire comprenant le dispositif de lutte contre la pollution atmosphérique selon l'une quelconque des revendications 1 à 6.

8. Procédé d'alimentation en eau pour fournir de l'eau à injecter dans un gaz d'échappement déchargé d'un moteur maritime (11), le procédé comprenant :
le recyclage d'une partie du gaz d'échappement déchargé depuis le moteur maritime (11) en tant que gaz de recyclage ;
l'injection d'eau dans le gaz de recyclage pour enlever une substance toxique ; et
la production d'un gaz de mélange en mélangeant de l'air provenant de l'air extérieur et le gaz de recyclage après l'injection ; caractérisé comme comprenant en outre les étapes de :
compression du gaz de mélange ;
refroidissement du gaz de mélange après la compression ; et
fourniture d'une eau condensée produite en refroidissant le gaz de mélange en tant qu'eau à injecter lors de l'injection.
